# EUROPEAN PATENT SPECIFICATION

(11) **EP 2 804 468 B1**
(45) Date of publication and mention of the grant of the patent: **20.09.2017**
(21) Application number: 12880275.8
(22) Date of filing: 04.07.2012
(51) Int. Cl.: A01G 23/08, A01G 23/091, B27B 17/02

(54) **CUTTING ARRANGEMENT FOR GRIPPING AND CUTTING TREES OR BUSHES**
SCHNEIDEANORDNUNG ZUM ERGREIFEN UND ZERSCHNEIDEN VON BÄUMEN ODER STRÄUCHERN
AGENCEMENT DE COUPE POUR SAISIE ET COUPE D'ARBRES OU DE BUISSONS

(43) Date of publication of application: 26.11.2014
(73) Proprietor: Iggesund Forest AB, 820 72 Strömsbruk (SE)
(72) Inventor: HYPÉN, Hannu, FI-40270 Palokka (FI); BLADIN, Tord, S-820 72 Strömsbruk (SE)
(74) Representative: Löfgren, Jonas
(86) International application number: PCT/SE2012/050780
(87) International publication number: WO 2014/007701

(56) References cited:
- DE-A1- 3 145 800
- FR-A1- 2 736 003
- SE-C2- 533 077
- US-A- 3 334 670
- US-A- 3 540 500
- US-A- 3 713 466
- US-A- 3 713 466
- US-A- 5 560 111

## Description

### FIELD OF THE INVENTION AND PRIOR ART

The present invention relates to a cutting arrangement for gripping and cutting trees or bushes, wherein the cutting arrangement is a harvester head for tree harvesting or a grip saw comprising:
- a base structure;
- gripping members mounted to the base structure for holding one or more trees or bushes; and
- a cutting device for crosscutting one or more trees or bushes held by the gripping members, the cutting device comprising a saw chain guide bar pivotally mounted to the base structure and a saw chain extending around the guide bar along the peripheral edge thereof.

A cutting arrangement of the above-mentioned type in the form of a harvester head or grip saw may be used for cutting individual trees or bushes or bundles of trees or bushes. When such a cutting arrangement is used for cutting thin-stemmed vegetation in the form of energy forest, brushwood, coppice or the like or for felling trees in areas with a lot of brushwood around the trees, there is a risk that the saw chain is forced off the peripheral edge of the guide bar by sticks or branches that are wedged up between the saw chain and the peripheral edge of the guide bar during the cutting operation. This may cause time-consuming and costly interruptions in the cutting operation and damages to the saw chain. In order to reduce this problem, a wider type of guide bar in normally used when cutting thin-stemmed vegetation in the form of energy forest, brushwood, coppice or the like. However, a guide bar of such a wider type is not suitable for felling trees in connection with forest thinning.

When thinning is to be carried out by means of a harvester head in a forest where there is a lot of thin-stemmed vegetation in the form of brushwood, coppice or the like around the trees, it is sometimes necessary to clear the thin-stemmed vegetation by means of a manually handled clearing saw before the thinning is started. The guide bar of the harvester head is thereby prevented from cutting through such thin-stemmed vegetation during the felling of the trees and the above-mentioned problem is consequently avoided. However, the clearing of the thin-stemmed vegetation by means of a manually handled clearing saw is time consuming and costly.

A cutting arrangement in the form of a grip saw according to the preamble of claim 1 is previously known from DE 31 45 800 A1.

US 3 713 466 A discloses a hand-held power chain saw with a tip enclosure mounted on the free outer end of the saw chain guide bar to enclose and shield the outer end of the cutting chains, wherein a brush guide extends upwardly from the tip enclosure.

### OBJECT OF THE INVENTION

The object of the present invention is to provide a cutting arrangement for gripping and cutting trees or bushes which makes it possible to avoid the above-mentioned problem.

### SUMMARY OF THE INVENTION

According to the invention, said object is achieved by a cutting arrangement having the features defined in claim 1.

The cutting arrangement according to the invention comprises:
- a base structure;
- gripping members mounted to the base structure for holding one or more trees or bushes; and
- a cutting device for crosscutting one or more trees or bushes held by the gripping members, the cutting device comprising a saw chain guide bar pivotally mounted to the base structure and a saw chain extending around the guide bar along the peripheral edge thereof; and
- a first retaining member and a second retaining member arranged opposite each other at the nose end of the guide bar on opposite sides of the saw chain, the retaining members overlapping the sides of the saw chain at the nose end of the guide bar in order to prevent the saw chain from being forced off the peripheral edge of the guide bar by sticks or branches that may get wedged up between the saw chain and the peripheral edge of the guide bar when crosscutting one or more trees or bushes.

The retaining members will secure that the saw chain is kept in engagement with the peripheral edge of the guide bar at the nose end of the guide bar. Hereby, the saw chain is in a simple and efficient manner prevented from coming off the peripheral edge of the guide bar when cutting thin-stemmed vegetation in the form of energy forest, brushwood, coppice or the like or when felling trees in areas with a lot of brushwood around the trees. The retaining members will eliminate the need to use a wider guide bar when cutting thin-stemmed vegetation in the form of energy forest, brushwood, coppice or the like, and they will also eliminate the need to clear thin-stemmed vegetation before felling trees in a forest where there is thin-stemmed vegetation in the form of brushwood, coppice or the like around the trees.

Further advantages as well as advantageous features of the cutting arrangement according to the invention will appear from the following description and the dependent claims.

### BRIEF DESCRIPTION OF THE DRAWINGS

With reference to the appended drawings, a specific description of preferred embodiments of the invention cited as examples follows below. In the drawings:
- Fig 1: is a schematic lateral view illustrating a cutting arrangement according to a first embodiment of the present invention, as seen in a position for holding a tree trunk in a vertical direction,
- Fig 2: is a schematic front view of the cutting arrangement of Fig 1, as seen in a position when the tree trunk has been turned to a horizontal position,
- Fig 3: is a schematic planar view of a part of a guide bar included in the cutting arrangement of Figs 1 and 2,
- Fig 4: is a cut according to the line IV-IV in Fig 3, and
- Fig 5: is a schematic illustration of a cutting arrangement according to a second embodiment of the present invention.

### DETAILED DESCRIPTION OF EMBODIMENTS OF THE INVENTION

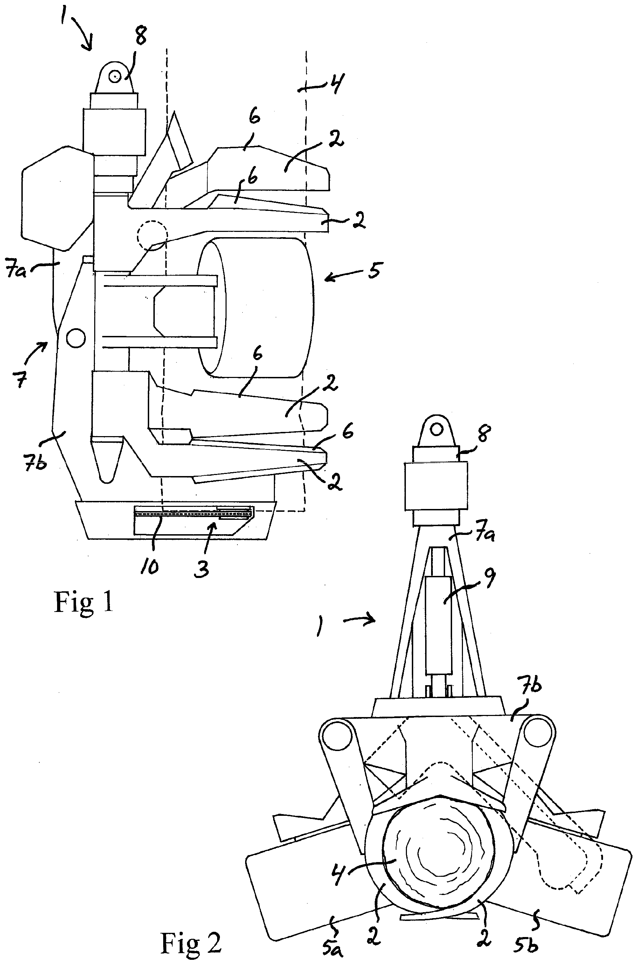

Figs 1 and 2 schematically illustrate a cutting arrangement 1 according to a first embodiment of the present invention. The cutting arrangement 1 illustrated in Figs 1 and 2 constitutes a harvester head for tree harvesting. This cutting arrangement 1 is in a conventional manner intended to be carried by a crane mounted to a forest vehicle, for instance in the form of a harvester. In the illustrated example, the harvester head is a socalled one grip harvester head, i.e. a harvester head configured to grip a standing tree by means of gripping members 2, cut the tree by means of a cutting device 3, lay the tree trunk 4 down to an essentially horizontal position (see Fig 2), and then by means of a feeding device 5 drive the tree trunk through the harvester head while simultaneously delimbing the tree trunk by means of delimbing members 6. In the illustrated example, the delimbing members 6 consist of delimbing knives arranged on the gripping members 2. In the illustrated example, the feeding device 5 comprises two rotatably driven feeding wheels 5a, 5b configured to come into engagement with the tree trunk on opposite sides thereof. The tree trunk 4 may be crosscut into individual logs by means of the cutting device 3. The cutting arrangement 1 of the present invention may also be a harvester head configured for full log handling, i.e. a harvester head which is used for felling a tree, but whereupon no crosscutting of the tree trunk into smaller logs is carried out by means of the harvester head.

The cutting arrangement 1 comprises a base structure 7. Gripping members 2 in the form of gripping arms are pivotally mounted to the base structure 7 so as to be pivotable towards each other in order to grip one or more trees received in the space between the gripping members. In the embodiment illustrated in Figs 1 and 2, the cutting arrangement 1 is provided with four gripping members 2, arranged in two pairs. Actuating members (not shown), for instance in the form of hydraulic cylinders, are mounted to the base structure 7 in order to pivot the gripping members 2 in relation to the base structure.

In the illustrated example, the base structure 7 comprises a first part 7a and a second part 7b, which is pivotally mounted to the first part 7a. The first part 7a of the base structure is provided with an attachment 8 for connection of the cutting arrangement 1 to the crane of a forest vehicle. The second part 7b of the base structure carries the gripping members 2, the cutting device 3 and the feeding device 5.

In Fig 1, the cutting arrangement 1 is shown with a crosscut tree trunk 4 (indicated with broken lines) held by the gripping members 2 with the tree trunk extending in vertical direction. In Fig 2, the cutting arrangement 1 and a tree trunk 4 held therein are shown after the cutting arrangement has laid the tree trunk down to a horizontal position. The manoeuvring from vertical to horizontal position is carried out by means of an actuating member 9, for instance in the form of a hydraulic cylinder, which is configured to turn the second part 7b of the base structure in relation to the first part 7a of the base structure.

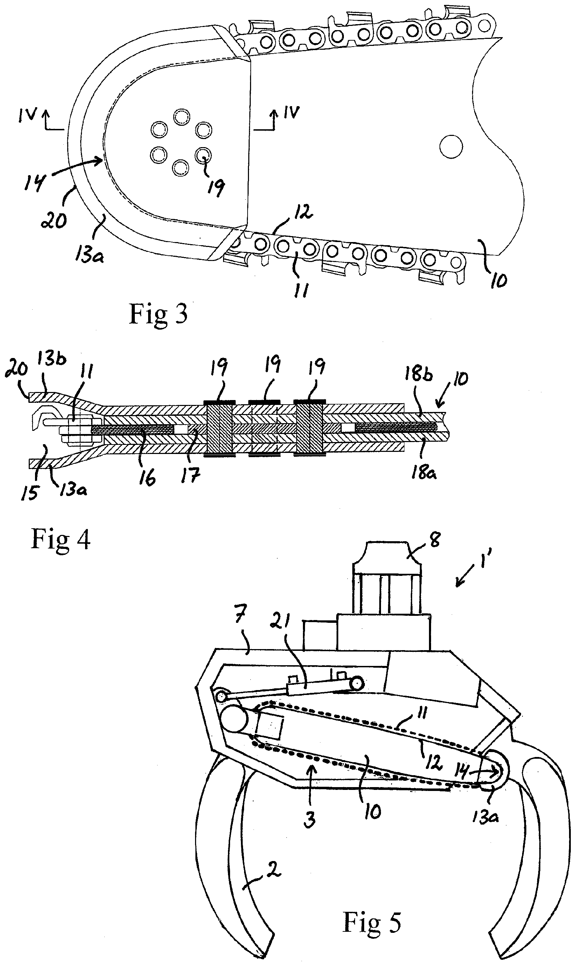

The cutting device 3 comprises a saw chain guide bar 10, which is pivotally mounted to the base structure 7. An actuating member (not shown), for instance in the form of a hydraulic cylinder, is mounted to the base structure 7 in order to pivot the guide bar 10 in relation to the base structure. The cutting device 3 also comprises a saw chain 11 (see Figs 3 and 4), which extends around the guide bar 10 along the peripheral edge 12 thereof. The saw chain 11 is rotated and thereby driven along the peripheral edge 12 of the guide bar by means of a driving motor (not shown) mounted to the base structure 7. A first retaining member 13a and a second retaining member 13b are arranged opposite each other at the nose end 14 of the guide bar on opposite sides of the saw chain 11. These retaining members 13a, 13b extend beyond the peripheral edge 12 of the guide bar at the nose end 14 thereof and overlap the sides of the saw chain 11 at the nose end 14 of the guide bar. The retaining members 13a, 13b thereby prevent the saw chain from being forced off the peripheral edge 12 of the guide bar by sticks or branches that may get wedged up between the saw chain 11 and the peripheral edge 12 of the guide bar when crosscutting one or more trees or bushes. The parts of the lateral edge 12 of the guide bar extending between the nose end and the other end of the guide bar is not provided with any retaining member of the above-mentioned type and the saw chain 11 is consequently exposed in a conventional manner along these parts of the lateral edge 12.

An outwardly open channel 15 is formed between the retaining members 13a, 13b. The saw chain 11 is received in this channel 15 at the nose end 14 of the guide bar. The retaining members 13a, 13b preferably extend beyond the outer edge of the saw chain 11 at the nose end 14 of the guide bar.

In the example illustrated in Figs 3 and 4, a sprocket wheel 16 is rotatably mounted to the guide bar 10 at the nose end 14 thereof. The retaining members 13a, 13b are arranged on opposite sides of this sprocket wheel 16 and extend beyond the periphery of thereof. The sprocket wheel 16 surrounds and is rotatably mounted to a circular plate 17, which is fixed between two opposite side plates 18a, 18b of the guide bar 10 by means of fastening members 19 in the form of bolts or rivets. In the illustrated example, the retaining members 13a, 13b are fixed to a respective one of said side plates 18a, 18b by means of said fastening members 19. As an alternative, the retaining members 13a, 13b may be fixed to the guide bar 10 by welding.

In the illustrated example, the respective retaining member 13a, 13b has the form of a plate with an arched outer edge 20 extending along the nose end 14 of the guide bar at a distance from the lateral edge 12 of the guide bar.

Fig 5 schematically illustrates a cutting arrangement 1' according to a second embodiment of the present invention. The cutting arrangement 1' illustrated in Figs 5 constitutes a grip saw. This cutting arrangement 1' is in a conventional manner intended to be carried by a crane of a vehicle.

The cutting arrangement 1' comprises a base structure 7. Gripping members 2 in the form of gripping arms are pivotally mounted to the base structure 7 so as to be pivotable towards each other in order to grip one or more trees or bushes received in the space between the gripping members. In the embodiment illustrated in Fig 5, the cutting arrangement 1' is provided with two gripping members 2. Actuating members (not shown), for instance in the form of hydraulic cylinders, are mounted to the base structure 7 in order to pivot the gripping members 2 in relation to the base structure.

The base structure 7 is provided with an attachment 8 for connection of the cutting arrangement 1' to the crane of a vehicle.

A cutting device 3 is mounted to the base structure 7. This cutting device 3 comprises a saw chain guide bar 10, which is pivotally mounted to the base structure 7. An actuating member 21, for instance in the form of a hydraulic cylinder, is mounted to the base structure 7 in order to pivot the guide bar 10 in relation to the base structure. The cutting device 3 also comprises a saw chain 11, which extends around the guide bar 10 along the peripheral edge 12 thereof. The saw chain 11 is rotated and thereby driven along the peripheral edge 12 of the guide bar by means of a driving motor (not shown) mounted to the base structure 7. A first retaining member 13a and a second retaining member 13b are arranged opposite each other at the nose end 14 of the guide bar on opposite sides of the saw chain 11. These retaining members 13a, 13b correspond to the retaining members which are illustrated in Figs 3 and 4 and described above.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A cutting arrangement for gripping and cutting trees or bushes, the cutting arrangement (1; 1') being a harvester head for tree harvesting or a grip saw comprising:
- a base structure (7);
- gripping members (2) mounted to the base structure (7) for holding one or more trees or bushes; and
- a cutting device (3) for crosscutting one or more trees or bushes held by the gripping members (3), the cutting device (3) comprising a saw chain guide bar (10) pivotally mounted to the base structure (7) and a saw chain (11) extending around the guide bar (10) along the peripheral edge (12) thereof,
**characterized in that** a first retaining member (13a) and a second retaining member (13b) are arranged opposite each other at the nose end (14) of the guide bar on opposite sides of the saw chain (11), the retaining members (13a, 13b) overlapping the sides of the saw chain (11) at the nose end (14) of the guide bar in order to prevent the saw chain from being forced off the peripheral edge (12) of the guide bar by sticks or branches that may get wedged up between the saw chain (11) and the peripheral edge (12) of the guide bar when crosscutting one or more trees or bushes.

2. A cutting arrangement according to claim 1, **characterized in that** a sprocket wheel (16) is rotatably mounted to the guide bar (10) at the nose end (14) thereof, the retaining members (13a, 13b) being arranged on opposite sides of the sprocket wheel (16) and extending beyond the periphery of the sprocket wheel.

3. A cutting arrangement according to claim 2, **characterized in:**
- **that** the sprocket wheel (16) surrounds and is rotatably mounted to a circular plate (17), which is fixed between two opposite side plates (18a, 18b) of the guide bar (10) by means of fastening members (19) in the form of bolts or rivets; and
- **that** the retaining members (13a, 13b) are fixed to a respective one of said sides plates (18a, 18b) by means of said fastening members (19).

4. A cutting arrangement according to claim 1 or 2, **characterized in that** the retaining members (13a, 13b) are fixed to the guide bar (10) by welding.

5. A cutting arrangement according to any of claims 1-4, **characterized in that** the respective retaining member (13a, 13b) has the form of a plate.

6. A cutting arrangement according to claim 5, **characterized in that** the respective retaining member (13a, 13b) has an arched outer edge (20).

7. A cutting arrangement according to any of claims 1-6, **characterized in that** the saw chain (11), at the nose end (14) of the guide bar, is received in an outwardly open channel (15) formed between the retaining members (13a, 13b).

8. A cutting arrangement according to any of claims 1-7, **characterized in that** the retaining members (13a, 13b) extend beyond the outer edge of the saw chain (11) at the nose end (14) of the guide bar.

## Patentansprüche

1. Schneideanordnung zum Ergreifen und Abschneiden von Bäumen oder Sträuchern, wobei die Schneideanordnung (1; 1') ein Harvesteraggregat zum Baumfällen ist oder eine Greifersäge, umfassend:
- eine Grundstruktur (7);
- Greiferkörper (2), die an der Grundstruktur (7) angebracht sind und dazu dienen, einen oder mehrere Bäume oder Sträucher festzuhalten; und
- eine Schneidvorrichtung (3) zum Querschneiden eines oder mehrerer Bäume oder Sträucher, die von den Greifkörpern (2) gehalten werden, wobei die Schneidvorrichtung (3) eine Sägeketten-Führungsschiene (10), die verschwenkbar an der Grundstruktur (7) angebracht ist, und eine Sägekette (11) aufweist, die sich rund um die Führungsschiene (10) entlang ihrer Umfangskante (12) erstreckt,
**dadurch gekennzeichnet, daß** ein erster Rückhaltekörper (10a) und ein zweiter Rückhaltekörper (13b) einander gegenüberliegend an dem Nasenende (14) der Führungsschiene auf gegenüberliegenden Seiten der Sägekette (11) angeordnet sind, und daß die Rückhaltekörper (13a, 13b) die Seiten der Sägekette (11) an dem Nasenende (14) der Führungsschiene überlappen, um die Sägekette daran zu hindern, von der Umfangskante (12) der Führungsschiene weggedrückt zu werden, und zwar durch Äste oder Zweige, die zwischen die Sägekette (11) und die Umfangskante (12) der Führungsschiene gequetscht werden können, wenn ein oder mehrere Bäume oder Sträucher quer abgeschnitten werden.

2. Schneideanordnung nach Anspruch 1, **dadurch gekennzeichnet, daß** ein Kettenrad (16) an dem Nasenende (14) der Führungsschiene (10) drehbar gelagert ist, und daß die Rückhaltekörper (13a, 13b) auf gegenüberliegenden Seiten des Kettenrades (16) angeordnet sind und sich über den Umfang des Kettenrades hinaus erstrecken.

3. Schneideanordnung nach Anspruch 2, **dadurch gekennzeichnet:**
- **daß** das Kettenrad (16) an einer kreisförmigen Platte (17), die es umgibt, drehbar gelagert ist, wobei die kreisförmige Platte zwischen zwei gegenüberliegenden Seitenplatten (18a, 18b) der Führungsschiene (10) mit Hilfe von Befestigungselementen (19) in Form von Bolzen oder Nieten befestigt ist;
und
- **daß** die Rückhaltekörper (13a, 13b) mit einer entsprechenden der Seitenplatten (18a, 18b) mit Hilfe von den besagten Befestigungselementen (19) fest verbunden sind.

4. Schneideanordnung nach Anspruch 1 oder 2, **dadurch gekennzeichnet, daß** die Rückhaltekörper (13a, 13b) mit der Führungsschiene (10) durch Verschweißen fest verbunden sind.

5. Schneideanordnung nach einem der Ansprüche 1 bis 4, **dadurch gekennzeichnet, daß** der entsprechende Rückhaltekörper (13a, 13b) die Form einer Platte hat.

6. Schneideanordnung nach Anspruch 5, **dadurch gekennzeichnet, daß** der entsprechende Rückhaltekörper (13a, 13b) eine gewölbte äußere Kante (20) aufweist.

7. Schneideanordnung nach einem der Ansprüche 1 bis 6, **dadurch gekennzeichnet, daß** die Sägekette (11) an dem Nasenende (14) der Führungsschiene in einem nach außen offenen Kanal (15) aufgenommen wird, der zwischen den Rückhaltekörpern (13a, 13b) ausgebildet ist.

8. Schneideanordnung nach einem der Ansprüche 1 bis 7, **dadurch gekennzeichnet, daß** die Rückhaltekörper (13a, 13b) an dem Nasenende (14) der Führungsschiene sich über die äußere Kante der Sägekette (11) hinaus erstrecken.

## Revendications

1. Agencement de coupe pour saisir et couper des arbres ou des buissons, l'agencement (1 ; 1') de coupe étant une tête de récolte d'arbre ou une scie à poignée, comprenant :
- une structure (7) de base ;
- des éléments (2) de prise montés sur la structure (7) de base pour tenir un ou plusieurs arbres ou buissons et
- un dispositif (3) de coupe pour tronçonner un ou plusieurs arbres ou buissons tenus par les éléments (3) de prise, le dispositif (3) de coupe comprenant une barre (10) de guidage de chaîne de scie, montée pivotante sur la structure (7) de base, et une chaîne (11) de scie, s'étendant autour de la barre (10) de guidage, le long de son bord (12) périphérique,
**caractérisé en ce qu'**un premier élément (13a) de retenue et un deuxième élément (13b) de retenue sont disposés en opposition l'un à l'autre, à l'extrémité (14) de nez de la barre de guidage, sur des côtés opposés de la chaîne (11) de la scie, les éléments (13a, 13b) de retenue chevauchant les côtés de la chaîne (11) de scie, à l'extrémité (14) de nez de la barre de guidage, afin d'empêcher la chaîne de scie d'être forcée hors du bord (12) périphérique de la barre de guidage par des bâtons ou des branches, qui peuvent se coincer entre la chaîne (11) de scie et le bord (12) périphérique de la barre de guidage lors du tronçonnage d'un ou de plusieurs arbres ou buissons.

2. Agencement de coupe suivant la revendication 1, **caractérisé en ce qu'**une roue (16) à picots est montée tournante sur la barre (10) de guidage à son extrémité (14) de nez, les éléments (13a, 13b) de retenue étant disposés sur des côtés opposés de la roue (16) à picots et s'étendant au-delà de la périphérie de la roue à picots.

3. Agencement de coupe suivant la revendication 2, **caractérisé :**
- **en ce que** la roue (16) à picots entoure, en y étant montée à rotation, une plaque (17) circulaire, qui est fixée entre deux plaques (18a, 18b) latérales opposées de la barre (10) de guidage au moyen d'éléments (19) de fixation, sous la forme de boulons ou de rivets et
- **en ce que** les éléments (13a, 13b) de retenue sont fixés à l'une respective des plaques (18a, 18b) latérales au moyen des éléments (19) de fixation.

4. Agencement de coupe suivant la revendication 1 ou 2, **caractérisé en ce que** les éléments (13a, 13b) de retenue sont fixés à la barre (10) de guidage par soudage.

5. Agencement de coupe suivant l'une quelconque des revendications 1 à 4, **caractérisé en ce que** l'élément (13a, 13b) de retenue respectif a la forme d'une plaque.

6. Agencement de coupe suivant la revendication 5, **caractérisé en ce que** l'élément (13a, 13b) de retenue respectif a un bord (20) extérieur arqué.

7. Agencement de coupe suivant l'une quelconque des revendications 1 à 6, **caractérisé en ce que** la chaîne (11) de la scie est, à l'extrémité (14) de nez de la barre de guidage, reçue dans un canal (15) débouchant vers l'extérieur et formé entre les éléments (13a, 13b) de retenue.

8. Agencement de coupe suivant l'une quelconque des revendications 1 à 7, **caractérisé en ce que** les éléments (13a, 13b) de retenue s'étendent au-delà du bord extérieur de la chaîne (11) de la scie, à l'extrémité (14) de nez de la barre de guidage.
